# EUROPEAN PATENT APPLICATION

(11) **EP 1 857 812 A1**
(43) Date of publication of application: **21.11.2007**
(21) Application number: 06252645.4
(22) Date of filing: 19.05.2006
(51) Int. Cl.: G01N 21/894

(54) **Control system**

(71) Applicant: Amcor Flexibles A/S, 8700 Horsens (DK)
(72) Inventor: Pritchard, Steven, Gloucestershire (GB)
(74) Representative: Hogg, Jeffery Keith

(57) **Abstract**

A digital camera (9) is provided to form successive images of holes in a film while the film is fed past the camera. These images are captured and parameters of the holes are analysed in an analyser (12) so as to determine whether or not the parameters meet predetermined quality standards, and a warning is triggered by the analyser if the quality standards are not met. A strobe light (10) illuminates the film to form the images of the hole, and the light and camera are operated at intervals to form successive images. The warning may serve to alert an operator, or trigger marking of the film, or monitor quality in real-time during the perforation process, or control the perforator (4) so as to correct for quality variations. The film perforator (4) can also be used to trigger operation of the camera (9) so as to correlate hole perforation with hole inspection. In the case of a light transmitting film, polarisation filters are used to obtain optimum image contrast between the hole and film. The gain setting of the camera is increased with increasing film speed to compensate for measurement error.

## Description

This invention relates to a quality control system for monitoring a parameter of holes formed in a film, especially a flexible packaging film.

Perforated packaging films are used to package produce, such as fresh produce, cheese, flowers, etc. The size and frequency of the perforations in the film is selected to suit the produce being packaged. In particular, the shelf life of fresh produce can be extended by packaging in film with perforation size and frequency such that, as the produce respires and gas and water vapour is exchanged with the surrounding atmosphere, the atmosphere within the package is modified and becomes oxygen depleted and carbon dioxide rich, which has the effect of suppressing respiration and slowing deterioration of the produce. Such packaging is termed modified atmosphere packaging MAP.

For MAP to be effective, it is important that the hole size and frequency is selected to match the produce; these parameters vary with different produce and quantities of produce packaged. Therefore when forming perforations in MAP film it is important to include a quality control process to ensure that perforation parameters are maintained within predetermined limits. To date, this involves taking samples of the processed film and measuring hole size and frequency. Typically, sampling is done at the end of processing a reel of film, and if the perforations are found not to meet the required quality standard, the reel is rejected. Only a small sample size is analysed, typically, for a reel 1100 metres long, with 110,000 perforations, only between 10 and 20 holes are measured, therefore the percentage of holes analysed is only 0.009 %. Also, the sampling process is off-line from the perforation forming process itself, and samples are taken after the whole reel has been perforated, so if the film is found to be defective, then this reel of film is wasted at considerable cost of material and processing time. Also, rectification of perforation problem can be time consuming and wasteful of material due to the need for continual adjustment of the perforator and starting and stopping of the machine to produce a sample for inspection. Also, although the perforation process is considered reliable and controllable, if the equipment is not operated correctly then irregular perforations will be produced either throughout the process or at irregular intervals. The known sampling procedure at the end of processing a reel will not necessarily detect these irregularities.

Further, the current sampling procedure is carried out by an operator and is therefore open to human error, which limits operating speeds and efficiencies.

An object of the invention is to provide an improved system for monitoring perforation quality, preferably in real-time throughout the processing of a film.

According to the invention a digital camera is provided to form successive images of the holes in the film while the film is fed past the camera; these images are captured and parameters of the holes are analysed in an analyser so as to determine whether or not the parameters meet predetermined quality standards, and a warning is triggered by the analyser if the quality standards are not met.

A strobe light illuminates the film to form the images of the hole, and the light and camera are operated at intervals to form successive images. Typically, a digital camera and strobe light are configured to capture good resolution images of holes in the film at film speeds up to 8 metres/second, with hole sizes between 10 and 600 microns diameter; at a frequency between 1 and 1000/ square metre.

The warning signal may serve to alert an operator of the apparatus, and may trigger marking of that portion of the film analysed as sub-standard. Also, the hole size and frequency monitoring system is used in conjunction with a film perforator that forms the hole in the film, then the warning signal from the analyser may be used to monitor quality in real-time during the perforation process, and may be used to control the perforator so as to correct for quality variations in hole size and frequency on-line. The control system of a film perforator can also be used to trigger operation of the camera so as to correlate hole perforation with hole inspection.

The distance of the light source from the film and orientation of the light beam relative to the film are both important parameters in obtaining clear images. Also, in the case of a light transmitting film, which will polarise transmitted light, polarisation filters are preferably used to obtain optimum image contrast between the hole and the film.

The tension of the film being analysed is also important to obtain clear images and for timing capture of an image. Preferably, a driven roller system is provided, additional to the main film drive, to tension the film while it is analysed. Also, a high resolution encoder is preferably provided to monitor the speed of the roller system, and hence the film, so that the position of the sample of the film/ perforation being analysed can be accurately determined relative to the field of view of the camera.

It is important to maintain the film at the focal distance of the camera lens, for example, by ensuring that film drive rollers rotate uniformly by reducing or eliminating vibration of the camera using suitable mounting means.

Test results indicate that the hole diameter as measured by the camera decreases as film speed increases. It has been found that this is due to blurring of the image of the hole. However, it has also been determined that it is possible to compensate for this effect by increasing the gain setting of the camera with increasing film speed. Increasing the gain setting increases the intensity of the captured image. Conversely, the gain setting is reduced with reduced film speed to reduce the intensity of the captured image.

The quality of the captured image is also found to vary with different film substrates having different optical properties, and this requires adjustment of camera gain, and the light threshold parameter, where the threshold parameter sets the level of light at which the hole is defined.

The invention will now be described by way of example with reference to the accompanying schematic drawing of film perforation apparatus which includes a quality control system for monitoring hole size and frequency.

A web of flexible plastics packaging film 1 is fed continuously between a pair of guide rollers 2, 3, and a perforator 4 is located between the rollers to perforate the film as it passes. The perforator 4 comprises a laser head which directs a laser beam at the film to form individual holes, and a laser controller 5 which controls repeated operation of the laser head in accordance with the film speed to form successive equi-spaced holes along the length of the film.

The speed of the film is controlled by a machine controller 6 which feeds a speed signal into the laser controller 5, which in turn feeds a control signal to the quality controller 7. The quality controller 7 feeds an output control signal to a digital camera 9 and a light source 10.

The camera 9 is located on the opposite side of the film 1 from the light source 10 downstream of the laser perforator 4. The camera has an extension tube 11 of 120mm in length connected to a telecentric lens 11a that gives a +/- 1mm tolerance on focal distance to allow for web movement laterally of its feed direction. This configuration produced a field of view of 1.3mm by 1.5mm.

The light source 10 is positioned directly opposite the camera lens 11a. Alternatively the light source is displaced laterally and a mirror is provided to reflect light from the source onto the film, the mirror being orientated at 90 degrees to the film surface,

The light source 10 is a strobe light and its operation is controlled at a frequency determined by the quality controller 7 in accordance with the film speed signal so that an image of each hole is captured after it has been formed by the laser perforator 4.

Image data from the camera 9 is fed to an image analyser 12 which analyses each image to determine whether the diameter of the hole is within a predetermined tolerance and whether the frequency of the holes in the film is also within a predetermined tolerance. Hole diameter is determined by measuring hole area and then deriving the diameter mathematically. The hole frequency is calculated by analysing the known repetition rate of the laser and the known web speed of the film to hence calculate the frequency of holes.

A display or warning device associated with the image analyser 12 may be set up to warn an operator of quality defects, such as unacceptable size holes or missed holes. Alternatively, the analyser 12 may generate an error signal that is fed back as a control signal to the laser controller 5 to correct for perforation errors automatically. The analyser may also control a marker to mark defective portions of the film, or an operator may do this manually, for example, using metalised tape.

The system as described is able to analyse holes between 10 and 600 microns diameter, although it is preferably used to analyse holes 40 to 150 microns in diameter. Analysis is possible at film speeds up to 8m/second with at least 20 inspections/second, but use on stationary film is not precluded. An analysis of the hole size and frequency can be made in terms of oxygen transmission rate which the holes will support, this being a critical parameter for MAP film.

The illustrated system can be readily calibrated on line. The camera and light source are moved over to the extreme end of the machine where there is a mounted section of film that has a known, calibrated hole in the centre of the sample. The camera is focused onto the film and hence the hole, and an image is captured for analysis to determine the hole diameter. This measured diameter is then compared to the known diameter, and if found to be incorrect, then the system is re-calibrated. Once calibration is complete, the camera and light source can then be repositioned over the perforation area.

In an alternative embodiment of the invention, operation of the camera 9 instead of being controlled from the laser controller to capture an image of each hole or predetermined periodically spaced holes, is controlled by the quality controller 7. The quality controller 7 can store programs for different specifications of film perforation according to their intended use with different products.

The illustrated apparatus shows the use of a quality control system with a perforator 4, but it will be appreciated that the quality control system can be used on pre-perforated film specifically for quality control or in conjunction with another finishing process such as slitting the film, printing the film, forming bags from the film or laminating the film.

In order to capture a clear hole image, the strobe light 10 is preferably selected with a 100 Watts power rating and an extremely fast on-off operating speed of 10 microseconds. The position of the strobe light relative to the film 1 is also important, the optimum distance being set at 130mm ± 10mm, with the light beam orientated at 90 degrees to the film surface.

Also, two polarisation filters 16 are provided to ensure optimum contrast between the film and the holes, with the light emitted by the strobe light 10 clearly visible through the hole. The optimum contrast is established by rotating one of the polarisation filters until the definition contrast between the light levels within the hole and the surrounding film is at its greatest.

The tension of the film 1 is important to capture a clear image and for capturing the image at the appropriate time as the holes pass the light and camera. The two rollers 2, 3 are located between the nip rollers (not shown) and the rewind mechanism (not shown), and create an additional zone of tensioned film there between. Both rollers 2, 3 are motor driven and are slaved off the main drive (not shown).

A high resolution encoder 13 , typically generating 1024 pulses per revolution resulting in a resolution of 0.245mm per encoder pulse, is fitted to one of the driven rollers 2, and monitors film speed accurately, thereby allowing the position of a hole to be determined accurately relative to the perforator 4 and the field of view of the camera 9. This arrangement is able to determine hole position to within ± 0.245mm at web speeds up to 6 metres/second.

The rollers 2, 3 are adapted to rotate uniformly within a tolerance of ± 0.025mm so as to maintain the film within the focal distance determined by the camera lens 11a. Also the camera 10 is preferably mounted so as to reduce or eliminate the effect of machine vibrations that would effectively cause the focal plane of the camera to move relative to the film. Rubber mounts are provided in a connecting bracket 14 which connects the camera to the machine. Also, the mounting bracket preferably comprises an adjustable mount 15, such as a dovetail linear mount not shown) which allows the camera to be adjusted accurately in both the x and y axis to +/- 0.02mm.

The hole diameter measurements determined by the analyser 12 at different film speeds from static up to 8 metres/second indicate that the hole diameter progressively reduces with increasing film speed. This effect is due to blurring of the image at increased speeds, and is compensated for in the analyser 12, preferably by adjusting the gain setting of the camera. The gain adjustment within the software basically effectively varies intensity of the light source by changing the light level of each pixel to make the captured image appear brighter or duller.

To evaluate the accuracy of hole measurement a number of systematic trials have been conducted to understand the potential error in measurement at different web speeds. Initially static hole images are analysed for diameter in a population of 500 holes within 1000 metres of a standard plastic OPP film.

The same film is then passed through the field of view of the camera at different operating speeds and the hole images are analysed again and compared against the static measurements. The results can be seen below:

| Web Speed | Sample size | Average Hole dia microns | Typical Standard deviation |
|---|---|---|---|
| Static | 500 | 98.45 | 1.2 |
| 1 m/sec | 505 | 98.23 | 1.4 |
| 2 m's/sec | 543 | 98.01 | 1.87 |
| 3 m's/sec | 532 | 96.23 | 2.2 |
| 4 m's/sec | 512 | 95.63 | 2.3 |
| 5 m's/sec | 542 | 93.52 | 2.8 |
| 6 m's/sec | 521 | 91.28 | 2.2 |

The table above clearly shows that the average hole diameter measured reduces as the web speed increases, but by adjusting the gain settings the results can be maintained within an acceptable tolerance. See table below:

| Web Speed | Sample size | Average Hole dia microns | Typical standard deviation | Gain setting % |
|---|---|---|---|---|
| Static | 504 | 98.45 | 1.2 | 100 % |
| 1 m/sec | 535 | 98.23 | 1.4 | 100 % |
| 2 m's/sec | 521 | 98.52 | 1.7 | 101 % |
| 3 m's/sec | 545 | 98.22 | 1.86 | 104 % |
| 4 m's/sec | 512 | 98.02 | 1.92 | 106 % |
| 5 m's/sec | 567 | 97.89 | 2.1 | 107 % |
| 6 m's/sec | 509 | 99.21 | 2.2 | 110 % |

The table above clearly shows that an accurate hole measurement can be taken at varying web speeds, by adjusting the gain setting and therefore adjusting the level of light of the illuminated hole.

Also, different film structures create different levels of contrast between the light seen through the hole and the light seen through the substrate of the film. Therefore, for each substrate, different polarisation positions are required to obtain the maximum contrast between the light seen through the hole and the light through the material. The gain setting also needs adjustment to ensure the optimum level of light is transmitted through the hole compared with that through the film.

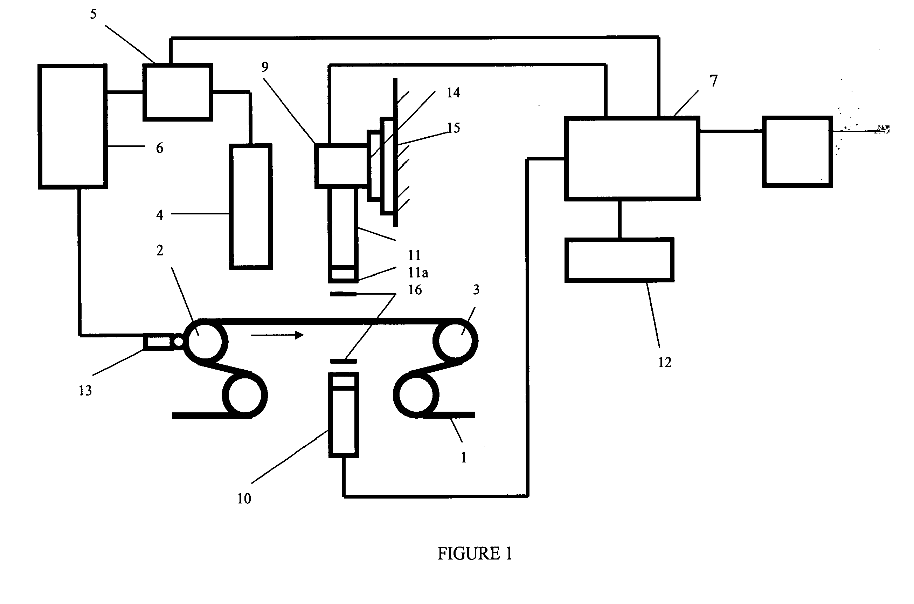

## Claims

1. A method of monitoring a parameter of holes formed in a film comprising providing a digital camera to receive light transmitted through the film and to form successive images of holes as the film is fed past the camera, capturing the images of the holes, and analysing each image to determine said parameter and to determine whether or not it meets predetermined quality standards.

2. A method as claimed in claim 1 in which the film is located at the focal point of the camera.

3. A method as claimed in claim 1 or 2 in which a strobe light is used to generate said light on the opposite side of the film from the camera.

4. A method as claimed in any one of the preceding claims in which a polarising filter is provided to filter transmitted light and increase the contrast of the image of a hole.

5. A method as claimed in any one of the preceding claims in which the tension of the film is maintained locally in the region of the camera.

6. A method as claimed in any one of the preceding claims in which the camera is mounted on vibration isolation mountings.

7. A method as claimed in any one of the preceding claims in which the analysis of a hole involves determination of the area of the hole.

8. A method as claimed in any one of the preceding claims in which the analysis determines the frequency of holes in the film by identifying successive holes and referencing the speed of the film.

9. A method as claimed in any one of the preceding claims in which the holes are monitored on-line while forming the holes in the film with a perforator.

10. A method as claimed in claim 9 in which operation of the camera is linked to operation of the perforator so as to correlate the formation of a hole with monitoring of a parameter of the hole.

11. A method as claimed in claims 9 or 10 in which analysis which shows that a hole fails to meet the predetermined quality standard, will generate a correction process that corrects the formation of a hole by the perforator.

12. A method as claimed in any one of the preceding claims in which with varying film speed, a correction is applied to the parameter determination.

13. A method as claimed in claim 12 in which with increasing film speed the intensity of a light source forming the image of the hole is increased, thereby to effect the required correction.

14. A method as claimed in claim 13 in which with increasing film speed, the measured hole size is increased to a corrected value.

15. Apparatus for monitoring a parameter of holes formed in a film according to any of the preceding claims.

16. Apparatus for monitoring a parameter of holes formed in a film comprising a digital camera to receive light transmitted through the film and to form successive images of holes as the film is fed past the camera, an analyser for capturing the images of the holes, and analysing each image to determine said parameter and to determine whether or not it meets predetermined quality standards.
